# EUROPÄISCHE PATENTSCHRIFT

(11) **EP 2 915 573 B1**
(45) Veröffentlichungstag und Bekanntmachung des Hinweises auf die Patenterteilung: **14.09.2016**
(21) Anmeldenummer: 14158084.5
(22) Anmeldetag: 06.03.2014
(51) Int. Cl.: B01D 46/00, B01D 46/10, B01D 46/16

(54) **Verfahren zum Herstellen eines konturierten Filterelementes und Filterelementanordnung**
Method for producing a contoured filter element and filter element assembly
Procédé de fabrication d'un élément de filtre entouré et dispositif d'éléments de filtre

(43) Veröffentlichungstag der Anmeldung: 09.09.2015
(73) Patentinhaber: Sefar AG, 9410 Heiden (CH)
(72) Erfinder: Dür, Hansjörg, 6858 Schwarzach (AT)
(74) Vertreter: Wunderlich, Rainer

(56) Entgegenhaltungen:
- EP-A1- 2 305 458
- DE-A1-102004 046 164
- JP-A- 2002 085 927
- US-A1- 2011 168 022

## Beschreibung

Die Erfindung betrifft ein Verfahren gemäß dem Oberbegriff des Anspruchs 1 zum Herstellen eines konturierten Filterelementes sowie eine Filterelementanordnung gemäß dem Oberbegriff des Anspruchs 8.

Aus der EP 2 305 458 A1 ist ein Lüftungsfilter sowie ein Verfahren zum Herstellen des selbigen bekannt. Hierbei wird in einem Mehrschichtaufbau, welcher eine Trägerschicht, eine Kleberschicht und ein Filtermaterial umfasst, ein Filterelement hergestellt, welches mittels eines Schneidwerkzeugs konfektioniert wird. Das Filtermaterial wird hierbei durchtrennt, wobei die Trägerschicht jedoch unverletzt bleibt.

Aus der DE 10 2004 046 164 A1 ist ein Verfahren zur Herstellung selbstklebender Membranfolien und nach diesem Verfahren erhältliche Membranfolien bekannt. Die Membranfolie weist eine partiell klebstofffreie Unterseite auf. Der Durchmesser der klebstofffreien Bereiche ist hierbei größer als der mittlere Abstand zwischen den Poren der Membran.

Aus der JP 2002-085927 ist ein konturiertes Filterelement bekannt, welches mit einer Klebeschicht versehen ist, um es an einer Zuluftöffnung eines Gehäuses zu befestigen. Das Filterelement ist mit einem Trägermaterial versehen, welches an der Rückseite angebracht ist und welches vor Gebrauch vom Filterelement abgezogen wird.

Filterelemente dienen der Abtrennung von Partikeln aus einer Flüssigkeit oder einem Gas. Filterelemente werden aus einem Filtermedium hergestellt, welches typischerweise ein Filtergewebe, ein Filtervlies oder eine Filtermembran sein kann. Das Filtermedium selbst wird als ein Bandmaterial oder in großen Abschnitten hergestellt, welche anschließend unterteilt und zu den gewünschten Filterelementen zugeschnitten werden.

Das Herstellen und das Beschneiden des Filtermediums zu dem Filterelement erfolgt üblicherweise bei einem hierauf spezialisierten Filtermediumhersteller. Die konturierten Filterelemente werden dann in der Regel zu einem Endverarbeiter geliefert, welcher die Filterelemente weiterverarbeitet, insbesondere in einen Rahmen oder ein Gehäuse einfügt. Derartige Produkte können beispielsweise Luft-, Öl- oder Flüssigkeitsfilter für Kraftfahrzeuge sein. Derartige Filtervorrichtungen für Kraftfahrzeuge werden in großen Stückzahlen benötigt und daher häufig in einem weitgehend automatisierten Verfahren gefertigt.

Aufgrund der empfindlichen Struktur des relativ dünnen und flexiblen Filterelementes sind dessen Transport und Lagerung sowie das Handling bei einer automatisierten Weiterverarbeitung problematisch. Bei unsachgemäßer Handhabung kann das empfindliche Filterelement beschädigt oder verformt werden, so dass bei der Endverarbeitung eine Störung auftritt oder der damit hergestellte Filter schadhaft ist.

Ebenso kann die weiche und nicht formstabile Struktur des Filtermediums bereits beim Schneiden des Filterelementes zu unerwünschten Konturabweichungen führen.

Der Erfindung liegt die Aufgabe zugrunde, ein Verfahren zum Herstellen eines konturierten Filterelementes und eine Filterelementanordnung anzugeben, welche eine besonders zuverlässige Be- und Verarbeitung eines Filterelementes ermöglichen.

Die Aufgabe wird zum einen mit einem Verfahren mit den Merkmalen des Anspruchs 1 und zum anderen mit einer Filterelementanordnung mit den Merkmalen des Anspruchs 8 gelöst. Bevorzugte Ausführungsbeispiele der Erfindung sind in den jeweils abhängigen Ansprüchen angegeben.

Gemäß der Erfindung ist ein Verfahren zum Herstellen eines konturierten Filterelementes vorgesehen, bei welchem mindestens ein Filtermedium auf ein flächiges Trägermaterial aufgebracht und lösbar daran befestigt wird und das Filtermedium auf dem Trägermaterial zum Bilden des konturierten Filterelementes beschnitten wird, wobei das konturierte Filterelement zum Gebrauch von dem Trägermaterial gelöst werden kann.

Ein Grundgedanke der Erfindung besteht darin, bereits bei der Herstellung des konturierten Filterelementes ein flächiges Trägermaterial vorzusehen, auf welchem ein Ausgangsfiltermedium lösbar befestigt wird. Das Filtermedium kann ein gegebenenfalls vorbeschnittenes Filtermediumstück sein, etwa ein Filtergewebe, ein Filtervlies, eine Filtermembran, einer Kombination hiervon oder ein anderes Filtermedium. Das flächige Trägermaterial stabilisiert und fixiert das weiche und flexible Filtermedium, so dass ein formgenaues Konturieren erfolgen kann. Dabei kann das so hergestellte konturierte Filterelement etwa bis zu einer Weiterverarbeitung auf dem Trägermaterial verbleiben. Hierdurch wird ein Schutz gegen eine Beschädigung oder eine unerwünschte Verformung des Filterelementes erreicht. Zudem erlaubt diese erfindungsgemäße Anordnung eines konturierten Filterelementes auf dem Trägermaterial aufgrund der verbesserten Formstabilität eine zuverlässige Handhabung bei der Weiterverarbeitung des Filterelementes zu einem Filter. Dies ist insbesondere für automatisierte Verfahren, etwa zur Herstellung eines Luft-, Öl- oder Flüssigkeitsfilters, wie sie in einem Kraftfahrzeug vielfältig Anwendung finden, vorteilhaft.

Grundsätzlich können Filterelement und Trägermaterial durchschnitten werden. Eine bevorzugte Ausführungsform der Erfindung besteht darin, dass zum Beschneiden eine Schneideinrichtung eingesetzt wird, durch welche zumindest bereichsweise das Filterelement beschnitten wird, während das Trägermaterial unbeschnitten verbleibt. Die Schneideinrichtung, welche einen Laser oder ein Schneidmesser aufweisen kann, wird dabei so eingestellt, dass lediglich das Filterelement beschnitten wird. Das grundsätzlich schneidfähige dünne Trägermaterial wird dabei nicht durchschnitten. Der bei dem so durchgeführten Konturieren erzeugte Beschneidrest kann von dem Trägermaterial entfernt werden, während das konturierte Filterelement auf dem Trägermaterial verbleibt.

Gemäß einer weiteren Variante der Erfindung ist es vorteilhaft, dass zum Beschneiden eine Schneideinrichtung eingesetzt wird, durch welche zumindest bereichsweise das Filterelement zusammen mit dem Trägermaterial beschnitten wird. Die Schneideinrichtung wird in diesem Fall oder zum Beschneiden dieses Bereiches so eingestellt, dass sowohl das Filterelement als auch das dünne Trägermaterial durchschnitten werden. Dies ist etwa beim Ausschneiden von Löchern aus dem Filterelement vorteilhaft, da der Beschneidrest des Filterelementes mit dem ausgeschnittenen Trägermaterial formstabiler ist, so dass dieser leichter und zuverlässiger abgeführt werden kann.

Gemäß einer zweckmäßigen Ausgestaltung des erfindungsgemäßen Verfahrens ist es vorgesehen, dass das Filtermedium als ein Band oder in mehreren Stücken auf ein zusammenhängendes Trägermaterial aufgebracht wird und dass beim Beschneiden des Filtermediums das Trägermaterial zusammenhängend bleibt. Das Filtermedium kann formgleich zu dem bandförmigen Trägermaterial gebildet sein und so im Wesentlichen eine Seite des Trägermateriales bedecken. Der Beschneidrest kann als ein zusammenhängendes Band oder Netz leicht abgeführt werden. In materialsparender Weise können auch vorgeschnittene Stücke des Filtermediums auf das Trägermaterial aufgebracht werden. In dieser so fixierten und stabilisierten Position kann dann ein formgenaues Beschneiden zum Erreichen der gewünschten Kontur durchgeführt werden. Das zusammenhängende Trägermaterial, welches insbesondere bandförmig ist, kann so zum Transport und zur Lagerung einer Vielzahl von Filterelementen eingesetzt werden.

Nach der Erfindung ist es vorgesehen, dass zum Bilden einer Außenkontur des Filterelementes das Filtermedium beschnitten wird, wobei das Trägermaterial entlang der Außenkontur undurchschnitten verbleibt. Damit steht das Trägermaterial seitlich gegenüber der Außenkontur des Filterelementes vor und schützt dieses während des Transports und der Lagerung.

Weiterhin ist es erfindungsgemäß vorgesehen, dass zum Bilden eine Innenkontur des Filterelementes mindestens ein Loch in das Filterelement eingeschnitten wird, wobei entlang der Innenkontur das Filterelement und das Trägermaterial durchschnitten werden. Auf diese Weise kann ein innerer Beschneidrest mit großer Zuverlässigkeit aufgrund des noch angebrachten Trägermaterialrestes abgeführt werden. Vorzugsweise ist eine Vielzahl von Löchern und Öffnungen zum Bilden einer Innenkontur des Filterelementes in dieses eingebracht.

Für eine Weiterverarbeitung des Filterelementes ist es erfindungsgemäß vorgesehen, dass in das Filterelement und/oder das Trägermaterial mindestens ein Positionierloch eingeschnitten wird, welches für ein positioniertes Entnehmen des Filterelementes von dem Trägermaterial vorgesehen ist. Das Positionierloch hat bei der Weiterverarbeitung des Filterelementes maßgeblich die Funktion, durch Zusammenwirken mit einem Positionierstift das Filterelement und/oder das Trägermaterial in eine gewünschte Position zu bringen. Die erhöhte Materialstärke aufgrund des Loches durch das Filterelement und das Trägermaterial gewährleistet eine zuverlässige Positionierung. In dieser definierten Position kann dann für eine Weiterverarbeitung das Filterelement positionsgenau gegriffen und vom Trägermaterial gelöst werden. Die Positionierlöcher können auch nur in dem Trägerelement, etwa in dem Randbereich neben den Filterelementen eingebracht sein.

Grundsätzlich können zum Konturieren verschiedene Schneideinrichtungen, insbesondere Schneid- oder Stanzmesser mit stillstehender oder rotierender Klinge eingesetzt werden. Ein besonders exaktes Konturieren wird nach einer Weiterbildung der Erfindung dadurch erreicht, dass die Schneideinrichtung zum Beschneiden einen Laser aufweist. Der Laser kann dabei so gesteuert sein, dass er bereichsweise nur das Filtermedium und bereichsweise das Filtermedium zusammen mit dem dünnen Trägermaterial durchschneidet.

Gemäß der Erfindung ist eine Filterelementanordnung mit einem flächigen Trägermaterial vorgesehen, auf welchem mindestens ein konturiertes Filterelement ablösbar angebracht ist, wobei das Filterelement auf dem Trägermaterial durch Beschneiden eines auf dem Trägermaterial aufgebrachten Filtermediums gebildet ist. Mit der Filterelementanordnung werden die zuvor beschriebenen Vorteile hinsichtlich eines geschützten Transportes und der Lagerung sowie einer zuverlässigen und positionsgenauen Weiterverarbeitung des Filterelementes erreicht. Diese Filterelementanordnung ist vorzugsweise durch ein Verfahren hergestellt, welches vorausgehend beschrieben wurde.

In vorteilhafter Weise ist diese Filterelementanordnung dadurch weitergebildet, dass das flächige flexible Trägermaterial über eine beschnittene Außenkontur des Filterelementes vorsteht. Durch dieses Vorstehen wird insbesondere der empfindliche Rand oder die empfindliche Außenkontur des Filterelementes durch das Trägermaterial geschützt.

Weiterhin ist es nach der Erfindung vorteilhaft, dass das Filterelement eine Innenkontur mit mindestens einem Loch aufweist, wobei das Loch in das Filterelement und das Trägermaterial eingeschnitten ist. Dies erlaubt ein zuverlässiges Herstellen einer Innenkontur mit sicherer Abführung eines inneren Beschneidrestes.

Eine gute Transport- und Lagerfähigkeit wird gemäß einer Weiterbildung der Erfindung dadurch erreicht, dass das Trägermaterial ein flexibles Band ist, welches zum Transport mit dem mindestens einen aufgebrachten beschnittenen Filterelement aufgerollt ist. Besonders zweckmäßig ist es, wenn eine Vielzahl von konturierten Filterelementen hintereinander auf dem flexiblen Band angeordnet ist. Diese rollenartige Filterelementanordnung kann insbesondere in vorteilhafter Weise bei einer automatisierten Serienfertigung von Filtervorrichtungen eingesetzt werden.

Das Trägermaterial für die erfindungsgemäße Filteranordnung ist flexibel und dünn, wobei die Wandstärke zwischen einigen Millimetern bis zu wenigen Hundertstelmillimetern erreichen kann. Als flexibles Trägermaterial können Textilstoffe, wie Gewebe, Vliese etc. oder Folien eingesetzt werden. Grundsätzlich ist auch die Verwendung einer Metallfolie möglich. Ein besonders zweckmäßiges und kostengünstiges Trägermaterial besteht nach der Erfindung darin, dass das Trägermaterial eine Kunststofffolie ist.

Für ein effizientes Befestigen des Filtermediums auf dem Trägermaterial ist es nach einer Weiterbildung der Erfindung vorgesehen, dass das Trägermaterial mit einer Klebeschicht versehen ist, von welcher das Filterelement leicht und widerstandsfrei lösbar ist. Das Trägermaterial ist vorzugsweise ein Einwegmaterial und wird nach dem Entfernen des Filterelementes entsorgt.

Die Erfindung wird nachfolgend anhand von bevorzugten Ausführungsbeispielen beschrieben, welche schematisiert in den beigefügten Zeichnungen dargestellt sind. In den Zeichnungen zeigen:
- Fig.1: eine schematische Draufsicht auf eine erste erfindungsgemäße Filterelementanordnung; und
- Fig. 2: eine schematische Ansicht einer zweiten erfindungsgemäßen Filterelementanordnung.

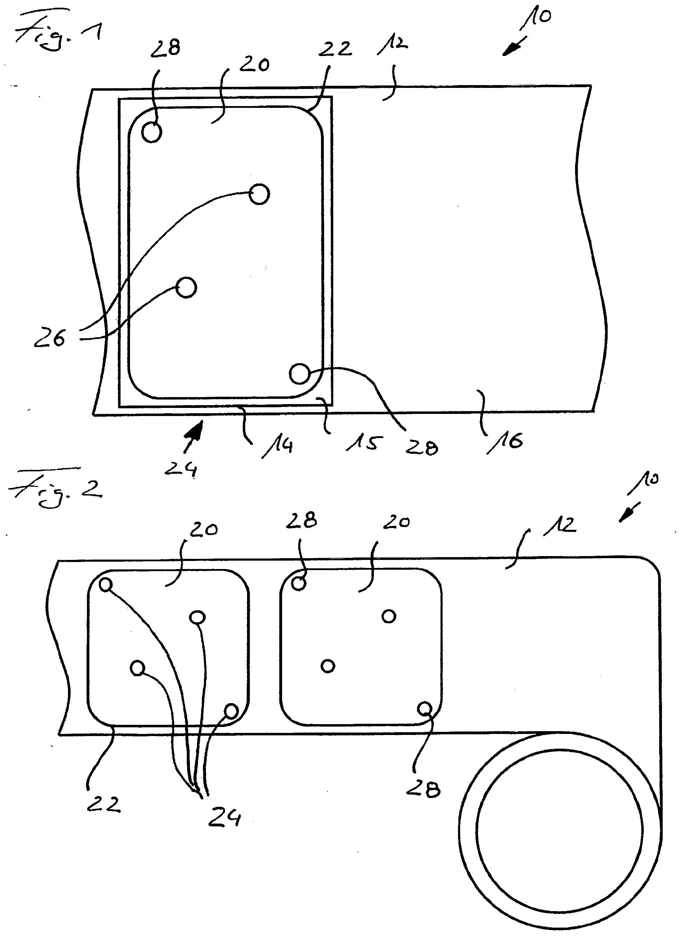

Gemäß Fig. 1 ist eine Filterelementanordnung 10 dargestellt, bei welcher eine blattoder streifenförmige Kunststofffolie als Trägermaterial 12 vorgesehen ist. Auf einer Oberseite des Trägermateriales 12 ist eine Kleberschicht 16 vorgesehen, welche ein leichtes und lösbares Anhaften eines Filtermediums 14 auf dem Trägermaterial 12 ermöglicht.

Als Filtermedium 14 ist in dem Ausführungsbeispiel gemäß Fig. 1 ein rechteckiges Blatt aus einem Filtergewebe oder einem Filtervlies vorgesehen. Dieses vorgeschnittene rechteckige Filtermedium 14 wird zum Beschneiden und Bilden eines Filterelementes 20 auf die Kleberschicht 16 des Trägermaterials 12 aufgebracht. Auf dem Trägermaterial 12 wird dann über eine nicht dargestellte Schneideinrichtung ein Besäumen des Filtermediums 14 durchgeführt. Hierbei wird ein rahmenförmiger Besäumrest 15 vom Filtermedium 14 abgetrennt. Bei diesem Schneidvorgang wird ausschließlich das Material des Filtermediums 14 durchschnitten, jedoch nicht das darunterliegende Trägermaterial 12. Der Besäumrest 15 kann von Hand oder durch eine automatisierte Abnahmevorrichtung vom Trägermaterial 12 abgezogen werden, während das so besäumte Filterelement 20 auf dem Trägermaterial 12 verbleibt.

Gleichzeitig oder zeitlich getrennt von dem Besäumen zum Bilden der Außenkontur 22 werden Löcher 26, 28 zum Bilden einer Innenkontur 24 über die Schneideinrichtung eingeschnitten. Die Außenkontur 22 und die Innenkontur 24 sind so lagegenau zueinander gebildet.

Zumindest die im äußeren Randbereich des Filterelementes 20 liegenden Positionierlöcher 28 werden dabei derart geschnitten, dass sowohl das Material des Filterelementes 20 als auch das darunter liegende Trägermaterial 12 durchschnitten wird. Die ausgeschnittenen Lochscheiben als Beschneidrest bestehen somit einerseits aus dem Material des Filterelementes und andererseits dem darunter durch Kleben angebrachten und ausgeschnittenen Trägermaterial. Der Beschneidrest ist so formstabiler und kann zuverlässig abgeführt werden. Die so durch das Filterelement 20 und das Trägermaterial 12 hindurchragenden Positionierlöcher 28 können bei der weiteren Verarbeitung des Filterelementes 20 für eine genaue Lagepositionierung in einem Fertigungsautomaten verwendet werden. Durch ein entsprechendes Eingreifen von passenden Zentrierstiften kann so die Filterelementanordnung 10 zuverlässig transportiert und lagegenau angeordnet werden. Die Positionierlöcher 28 können neben dieser Positionierungsfunktion auch eine Funktion im fertigen Filterelement 20 aufweisen, etwa für den Durchtritt von Leitungskanälen oder Schäften in einer Filtervorrichtung.

Darüber hinaus können zum Bilden der Innenkontur 24 auch weitere Löcher 26 in das Filterelement 20 eingeschnitten sein. Diese weiteren Löcher 26 dienen nicht einer Positionierfunktion, sondern sind entsprechend der gewünschten Form und Funktion des Filterelementes 20 ausgebildet. Diese weiteren Löcher 26 können wie die Außenkontur 22 so beschnitten sein, dass ausschließlich das Material des Filterelementes 20, jedoch nicht das darunter liegende Trägermaterial 12 durchschnitten wird. Für ein gutes Abführen des Beschneidrestes beim Beschneiden der Löcher 26 ist es jedoch wie bei den zuvor beschriebenen Positionierlöchern 28 zweckmäßig, dass beim Schneiden der Löcher 26 auch das darunter liegende Trägermaterial 12 durchschnitten wird.

Gemäß Fig. 2 ist eine zweite erfindungsgemäße Filterelementanordnung 10 dargestellt, welche weitgehend der zuvor beschriebenen Filterelementanordnung 10 nach Fig. 1 entspricht. Bei der Filterelementanordnung 10 gemäß Fig. 2 ist das Trägermaterial 12 als ein Band ausgebildet, auf welchem eine Vielzahl von Filterelementen 20 angeordnet und beschnitten ist. Aus Übersichtlichkeitsgründen sind lediglich zwei Filterelemente 20 in Fig. 2 dargestellt. Zudem ist bei der Darstellung gemäß Fig. 2 der Besäumrest 15 bereits entfernt, welcher beim Beschneiden und Bilden der Außenkontur 22 anfällt.

Fig. 2 ist insbesondere zu entnehmen, dass die Positionierlöcher 28, welche einen Teil der Innenkontur 24 bilden, entlang den Außenkanten des bandförmigen Trägermateriales 12 in den jeweiligen Filterelementen 20 angeordnet sind. Diese Anordnung der Positionierlöcher 28 kann so ein Raster bilden, welches etwa für eine Zuführung der Filterelemente 20 auf dem bandförmigen Trägermaterial 12 zu einem Fertigungsautomaten nützlich ist. Das bandförmige Trägermaterial 12 gemäß Fig. 2 kann zum besseren Lagern und vereinfachten Transport zu einer Rolle aufgewickelt werden. Bei einer derartigen Aufwicklung kann es sinnvoll sein, dass die Kleberschicht 16 nicht großflächig auf einer Oberseite des Trägermateriales 12 aufgebracht ist, sondern sich nur an den jeweiligen Positionen der Filterelemente 20 befindet. Alternativ könnte auch eine Trennfolie beim Aufwickeln vorgesehen werden. Des Weiteren kann das Filtermedium nicht in vorgeschnittenen Stücken sondern als ein Band auf das bandförmige Trägermaterial 12 aufgebracht werden.

## Patentansprüche

1. Verfahren zum Herstellen konturierter Filterelemente (20), bei welchen
- mindestens ein Filtermedium (14) auf ein flächiges Trägermaterial (12) aufgebracht und lösbar daran befestigt wird, und
- das Filtermedium (14) auf dem Trägermaterial (12) zum Bilden der konturierten Filterelemente (20) beschnitten wird, wobei die konturierten Filterelemente (20) zum Gebrauch von dem Trägermaterial (12) gelöst werden können,
**dadurch gekennzeichnet,**
- **dass** ein bandförmiges Trägermaterial (12) vorgesehen wird,
- **dass** zum Bilden einer Außenkontur (22) der Filterelemente (20) das Filtermedium (14) auf dem bandförmigen Trägermaterial (12) beschnitten wird, wobei das bandförmige Trägermaterial (12) entlang der Außenkontur (22) der Filterelemente (20) undurchschnitten verbleibt, und
- **dass** zum Bilden einer Innenkontur (24) der Filterelemente (20) mindestens ein Loch (26, 28) in das Filterelement (20) geschnitten wird, wobei entlang der Innenkontur (24) das Filterelement (20) und das bandförmige Trägermaterial (12) durchschnitten werden.

2. Verfahren nach Anspruch 1,
**dadurch gekennzeichnet,**
**dass** zum Beschneiden eine Schneideinrichtung eingesetzt wird, durch welche zumindest bereichsweise das Filterelement (20) beschnitten wird, während das Trägermaterial (12) unbeschnitten verbleibt.

3. Verfahren nach Anspruch 1 oder 2,
**dadurch gekennzeichnet,**
**dass** zum Beschneiden eine Schneideinrichtung eingesetzt wird, durch welche zumindest bereichsweise das Filterelement (20) zusammen mit dem Trägermaterial (12) beschnitten wird.

4. Verfahren nach einem der Ansprüche 1 bis 3,
**dadurch gekennzeichnet,**
**dass** das Filtermedium (14) als ein Band oder in mehreren Stücken auf das zusammenhängende bandförmige Trägermaterial (12) aufgebracht wird und
**dass** beim Beschneiden des Filtermediums (14) das Trägermaterial (12) zusammenhängend bleibt.

5. Verfahren nach einem der Ansprüche 1 bis 4,
**dadurch gekennzeichnet,**
**dass** die Innenkontur (24) ein Positionierloch (28) umfasst, welches für ein positioniertes Entnehmen des Filterelementes (20) von dem Trägermaterial (12) vorgesehen ist.

6. Verfahren nach einem der Ansprüche 1 bis 5,
**dadurch gekennzeichnet,**
**dass** der beim Konturieren erzeugte Beschneidrest von dem bandförmigen Trägermaterial (12) entfernt wird, während die konturierten Filterelemente (20) auf dem Trägermaterial (12) verbleiben.

7. Verfahren nach einem der Ansprüche 1 bis 6,
**dadurch gekennzeichnet,**
**dass** die Schneideinrichtung zum Beschneiden einen Laser aufweist.

8. Filterelementanordnung mit einem flächigen Trägermaterial (12), auf welchem eine Vielzahl von konturierten Filterelementen (20) ablösbar angebracht ist, wobei die Filterelemente (20) durch Beschneiden eines auf dem Trägermaterial (12) aufgebrachten Filtermediums (14) gebildet sind,
**dadurch gekennzeichnet,**
- **dass** das Trägermaterial (12) bandförmig ist,
- **dass** die Filterelemente (20) auf dem bandförmigen Trägermaterial (12) durch Beschneiden mit einer Außenkontur (22) gebildet sind, wobei das bandförmige Trägermaterial (12) entlang der Außenkontur (22) der Filterelemente (20) undurchschnitten verbleibt, und
- **dass** das Filterelement (20) eine Innenkontur (24) mit mindestens einem Loch (26) aufweist, wobei das Loch (26) in das Filterelement (20) und das Trägermaterial (12) eingeschnitten ist.

9. Filterelementanordnung nach Anspruch 8,
**dadurch gekennzeichnet,**
**dass** das flächige flexible Trägermaterial (12) über eine beschnittene Außenkontur (22) des Filterelementes (20) vorsteht.

10. Filterelementanordnung nach Anspruch 8 oder 9,
**dadurch gekennzeichnet,**
**dass** die Innenkontur (24) mindestens ein Positionierloch (28) aufweist, welches für ein positioniertes Entnehmen des Filterelementes (20) von dem Trägermaterial (12) vorgesehen ist.

11. Filterelementanordnung nach einem der Ansprüche 8 bis 10,
**dadurch gekennzeichnet,**
**dass** das Trägermaterial (12) ein flexibles Band ist, welches zum Transport mit dem mindestens einen aufgebrachten beschnittenen Filterelement (20) aufgerollt ist.

12. Filterelementanordnung nach einem der Ansprüche 8 bis 11,
**dadurch gekennzeichnet,**
**dass** das Trägermaterial (12) eine Kunststofffolie ist.

13. Filterelementanordnung nach einem der Ansprüche 8 bis 12,
**dadurch gekennzeichnet,**
**dass** das Trägermaterial (12) mit einer Kleberschicht (16) versehen ist, von welcher das Filterelement (20) leicht und rückstandsfrei lösbar ist.

## Claims

1. Method for producing contoured filter elements (20), in which
- at least one filter medium (14) is applied to a planar carrier material (12) and fixed thereon in a detachable manner, and
- the filter medium (14) on the carrier material (12) is cut to form the contoured filter elements (20), wherein the contoured filter elements (20) can be detached from the carrier material (12) for use,
**characterized in that**
- a tape-shaped carrier material (12) is provided,
- to form an outer contour (22) of the filter elements (20) the filter medium (14) on the tape-shaped carrier material (12) is cut, wherein the tape-shaped carrier material (12) remains uncut along the outer contour (22) of the filter elements (20), and
- to form an inner contour (24) of the filter elements (20) at least one hole (26, 28) is cut into the filter element (20), wherein the filter element (20) and the tape-shaped carrier material (12) are cut through along the inner contour (24).

2. Method according to claim 1,
**characterized in that**
for cutting a cutting means is employed, through which the filter element (20) is cut at least in some areas while the carrier material (12) remains uncut.

3. Method according to claim 1 or 2,
**characterized in that**
for cutting a cutting means is employed, through which the filter element (20) together with the carrier material (12) is cut at least in some areas.

4. Method according to any one of claims 1 to 3,
**characterized in that**
the filter medium (14) is applied as a tape or in several pieces onto the continuous tape-shaped carrier material (12) and
**in that** during cutting of the filter medium (14) the carrier material (12) remains continuous.

5. Method according to any one of claims 1 to 4,
**characterized in that**
the inner contour (24) comprises a positioning hole (28) which is provided for a positioned removal of the filter element (20) from the carrier material (12).

6. Method according to any one of claims 1 to 5,
**characterized in that**
the cutting rest produced during contouring is removed from the tape-shaped carrier material (12) while the contoured filter elements (20) remain on the carrier material (12).

7. Method according to any one of claims 1 to 6,
**characterized in that**
the cutting means has a laser for cutting.

8. Filter element arrangement having a planar carrier material (12), on which a plurality of contoured filter elements (20) is fixed in a detachable manner, wherein the filter elements (20) are formed by cutting a filter medium (14) applied to the carrier material (12),
**characterized in that**
- the carrier material (12) is tape-shaped,
- the filter elements (20) on the tape-shaped carrier material (12) are formed with an outer contour (22) through cutting, wherein the tape-shaped carrier material (12) remains uncut along the outer contour (22) of the filter elements (20), and
- the filter element (20) has an inner contour (24) with at least one hole (26), wherein the hole (26) is cut into the filter element (20) and the carrier material (12).

9. Filter element arrangement according to claim 8,
**characterized in that**
the planar flexible carrier material (12) protrudes from a cut outer contour (22) of the filter element (20).

10. Filter element arrangement according to claim 8 or 9,
**characterized in that**
the inner contour (24) has at least one positioning hole (28) which is provided for a positioned removal of the filter element (20) from the carrier material (12).

11. Filter element arrangement according to any one of claims 8 to 10,
**characterized in that**
the carrier material (12) is a flexible tape which is wound up with the at least one applied cut filter element (20) for transport.

12. Filter element arrangement according to any one of claims 8 to 11,
**characterized in that**
the carrier material (12) is a plastic foil.

13. Filter element arrangement according to any one of claims 8 to 12,
**characterized in that**
the carrier material (12) is provided with an adhesive layer (16), from which the filter element (20) can be detached easily and residue-free.

## Revendications

1. Procédé de fabrication d'éléments de filtre (20) présentant un contour, selon lequel :
- au moins un milieu filtrant (14) est appliqué sur un matériau de support (12) plat celui-ci lui étant fixé de manière détachable, et
- le milieu filtrant (14) est découpé sur le matériau de support (12) pour la formation des éléments de filtre (20) définissant un contour, les éléments de filtre (20) présentant un contour pouvant alors être détachés du matériau de support (12) en vue de leur utilisation,
**caractérisé :**
- **en ce qu'**un matériau de support (12) en forme de bande est prévu,
- **en ce que**, pour la formation d'un contour extérieur (22) des éléments de filtre (20), le milieu filtrant (14) est découpé sur le matériau de support (12) en forme de bande, le matériau de support (12) en forme de bande restant alors non découpé le long du contour extérieur (22) des éléments de filtre (20), et
- **en ce que**, pour la formation d'un contour intérieur (24) des éléments de filtre (20), au moins un trou (26, 28) est découpé dans l'élément de filtre (20), l'élément de filtre (20) et le matériau de support (12) en forme de bande étant alors découpés le long du contour intérieur (24).

2. Procédé selon la revendication 1,
**caractérisé :**
**en ce que**, pour la découpe, un dispositif de coupe est utilisé, au moyen duquel l'élément de filtre (20) est découpé au moins partiellement, pendant que le matériau de support (12) reste non découpé.

3. Procédé selon la revendication 1 ou 2,
**caractérisé :**
**en ce que**, pour la découpe, un dispositif de coupe est utilisé, au moyen duquel l'élément de filtre (20) est découpé au moins partiellement en même temps que le matériau de support (12).

4. Procédé selon une des revendications 1 à 3,
**caractérisé :**
**en ce que** le milieu filtrant (14) est appliqué sous la forme d'une bande ou en plusieurs éléments sur le matériau de support (12) en forme de bande d'une seule pièce, et
**en ce que**, lors de la découpe du milieu filtrant (14), le matériau de support (12) reste d'une seule pièce.

5. Procédé selon une des revendications 1 à 4,
**caractérisé :**
**en ce que** le contour intérieur (24) comprend un trou de positionnement (28), qui est prévu pour un prélèvement positionné de l'élément de filtre (20) à partir du matériau de support (12).

6. Procédé selon une des revendications 1 à 5,
**caractérisé :**
**en ce que** le reste de découpe produit lors de la formation du contour est éloigné du matériau de support (12) en forme de bande, tandis que les éléments de filtre (20) présentant un contour restent sur le matériau de support (12).

7. Procédé selon une des revendications 1 à 6,
**caractérisé :**
**en ce que** le dispositif de coupe comprend, pour la découpe, un laser.

8. Agencement d'éléments de filtre avec un matériau de support (12) plat, sur lequel une pluralité d'éléments de filtre (20) présentant un contour sont placés en étant détachables, les éléments de filtre (20) étant formés au moyen de la découpe d'un milieu filtrant (14) appliqué sur le matériau de support (12),
**caractérisé :**
- **en ce que** le matériau de support (12) est en forme de bande,
- **en ce que** les éléments de filtre (20) sont formés sur le matériau de support (12) en forme de bande au moyen d'une découpe avec un contour extérieur (22), le matériau de support (12) en forme de bande restant non découpé le long du contour extérieur (22) des éléments de filtre (20), et
- **en ce que** l'élément de filtre (20) comprend un contour intérieur (24) avec au moins un trou (26), le trou (26) étant découpé dans l'élément de filtre (20) et dans le matériau de support (12).

9. Agencement d'éléments de filtre selon la revendication 8,
**caractérisé :**
**en ce que** le matériau de support (12) plat flexible est en saillie au-dessus d'un contour extérieur (22) découpé.

10. Agencement d'éléments de filtre selon la revendication 8 ou 9,
**caractérisé :**
**en ce que** le contour intérieur (24) comprend au moins un trou de positionnement (28), qui est prévu pour un prélèvement positionné de l'élément de filtre (20) à partir du matériau de support (12).

11. Agencement d'éléments de filtre selon une des revendications 8 à 10,
**caractérisé :**
**en ce que** le matériau de support (12) est une bande flexible, qui, pour le transport, est enroulée avec le au moins un élément de filtre (20) appliqué découpé.

12. Agencement d'éléments de filtre selon une des revendications 8 à 11,
**caractérisé :**
**en ce que** le matériau de support (12) est une feuille de matière plastique.

13. Agencement d'éléments de filtre selon une des revendications 8 à 12,
**caractérisé :**
**en ce que** le matériau de support (12) est pourvu d'une couche adhésive (16), à partir de laquelle l'élément de filtre (20) est détachable facilement et sans résidu.
